# EUROPÄISCHE PATENTSCHRIFT

(11) **EP 4 166 835 B1**
(45) Veröffentlichungstag und Bekanntmachung des Hinweises auf die Patenterteilung: **15.01.2025**
(21) Anmeldenummer: 22201034.0
(22) Anmeldetag: 12.10.2022
(51) Int. Cl.: F16L 33/207

(54) **MONTAGEGRUPPE FÜR EIN PRESSFITTING FÜR EINE ROHRVERBINDUNG**
ASSEMBLY GROUP FOR A PRESS FITTING FOR A PIPE CONNECTION
GROUPE DE MONTAGE POUR RACCORD À SERTIR POUR RACCORD DE TUYAU

(30) Priorität: 13.10.2021 DE 202021105547 U
(43) Veröffentlichungstag der Anmeldung: 19.04.2023
(73) Patentinhaber: Uponor Innovation AB, 73061 Virsbo (SE)
(72) Erfinder: Rotso, Vesa, 15240 Lahti (FI); Sobota, Gregor, 96191 Viereth (DE); Dittmar, Rainer, 97422 Schweinfurt (DE)
(74) Vertreter: Fenner, Seraina

(56) Entgegenhaltungen:
- EP-A1- 1 933 073
- DE-B3- 102018 109 555

## Beschreibung

Die Erfindung betrifft eine Montagegruppe für ein Pressfitting, aufweisend eine Presshülse und einen Anschlagring.

Die Erfindung betrifft des Weiteren ein Pressfitting für eine Rohrverbindung, aufweisend einen Fittingkörper und eine derartige Montagegruppe.

Pressfittinge für Rohrverbindungen sind aus dem Stand der Technik bekannt. Beispielsweise ist aus der

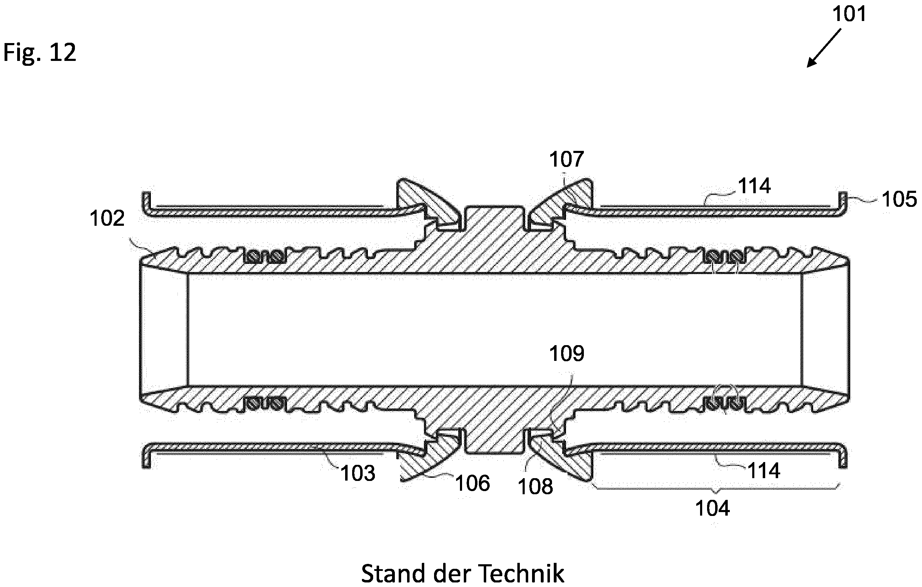

DE 10 2018 109 555 B3 ein Pressfitting 101 für eine Rohrverbindung bekannt, das in der Figur 12 dargestellt ist. Das Pressfitting 101 gemäß Figur 12 weist einen Fittingkörper 102 zum Verbinden des Pressfittings 101 mit einem Rohr, zwei an dem Fittingkörper 102 festgelegte Presshülsen 103 mit jeweils einem im Wesentlichen zylinderförmigen Pressbereich 104 und wenigstens einem hervorstehenden Element in Form eines Flansch 105, das den im Wesentlichen zylinderförmigen Pressbereich 104 in axialer Richtung begrenzt, und eine schlauchförmige Banderole 114 aus einer Kunststofffolie auf. Wie in der Figur 12 zu erkennen ist, wird jede der Presshülsen 103 mittels eines Halterings 106 an dem Fittingkörper 102 festgelegt. Hierzu weist die Presshülse 103 am proximalen Ende einen geringfügig aufgeweiteten Bereich 107 auf, der mit dem Haltering 106 verrastet ist. Der Haltering 106 ist des Weiteren mit dem Fittingkörper 102 über zwei gegenüberliegende Rastnasen 108 und 109 verrastet.

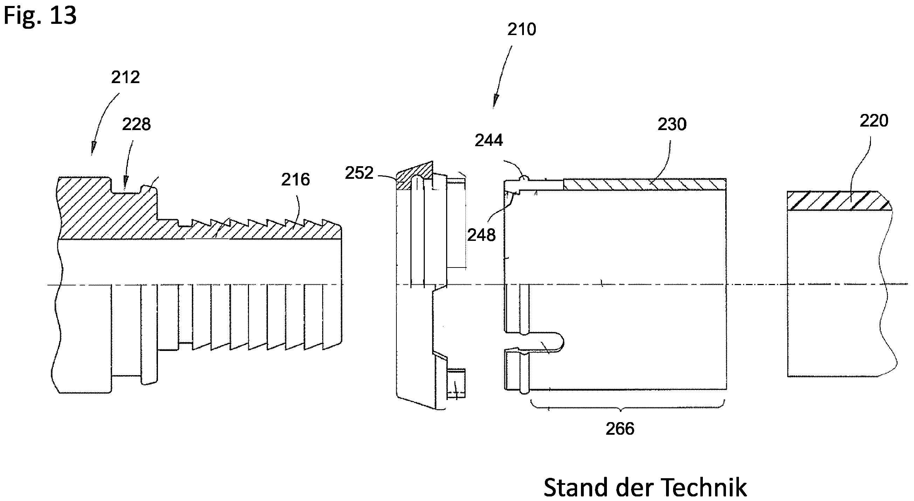

Des Weiteren ist aus der EP 1 790 896 A1 ein Pressfitting 210 für ein Rohr, insbesondere ein Kunststoffrohr oder ein Rohr aus einem Kunststoffmetallverbundwerkstoff, bekannt, das in der Figur 13 dargestellt ist.

Das Pressfitting 210 der Figur 13 ist mit einem Fittingkörper 212, der einen Stützkörper 216 aufweist, auf den ein anzuschließendes Rohr 220 aufschiebbar ist, einer Presshülse 230, die einen Verpressbereich 266 aufweist, in welchem bei Verpressung der Presshülse 230 auf diese ein Presswerkzeug einwirkt, und einem Verpressanzeigering 252, der an einer Außenwulst 244 der Presshülse 230 gehalten ist, versehen. Das Pressfitting 210 der Figur 13 unterscheidet sich unter anderem dadurch von dem Pressfitting 101 der Figur 12, dass ein Innenvorsprung 248 der Presshülse 230 direkt in eine außenliegende Umfangsvertiefung 228 des Fittingkörpers 212 eintaucht.

Aus der EP 1 933 073 A1 ist ein Pressfitting für ein Rohr, das mit einem Fittingkörper versehen ist, bekannt, der einen Stützkörper aufweist, auf den ein anzuschließendes Rohr aufschiebbar ist. Ferner weist das Pressfitting eine Presshülse auf, die ein Halteende aufweist, an welchem die Presshülse an dem Fittingkörper gehalten ist. Die Presshülse weist an ihrem Halteende zur Stirnseite der Presshülse hin offene Randaussparungen auf. Ein Kunststoffring liegt außen an der Presshülse und ist gegen Bewegungen in axialer Richtung der Presshülse an dieser gesichert, wobei der Kunststoffring mindestens einen axial abstehenden Vorsprung aufweist, der sich bis in den Verpressbereich der Presshülse hinein erstreckt und der bei Einwirkung des Presswerkzeuges auf die Presshülse zerstörbar und/oder von dem Kunststoffring abtrennbar gesichert ist.

Der vorliegenden Erfindung liegt die Aufgabe zugrunde, ein verbessertes, bevorzugt besonders einfach herzustellendes Pressfitting zu beschreiben. Insbesondere soll ein Pressfitting beschrieben werden, das die Herstellung einer dauerhaften, gegenüber Stößen, beispielsweise aus einer lateralen Richtung, unempfindlichen Verbindung zwischen einer Presshülse und einem Anschlagring ermöglicht, auch während der Herstellung und vor dem Verpressen des Pressfittigs, und/oder bei dem Beschädigungen an Einzelteilen, wie beispielsweise dem Fittingkörper, während der Herstellung reduziert beziehungsweise vermeiden werden können.

Die Erfindung ist in den angehängten Ansprüchen angegeben.

Gemäß einem ersten Aspekt der Offenbarung wird ein Pressfitting für eine Rohrverbindung offenbart. Das Pressfitting weist einen Fittingkörper zum Verbinden des Pressfittings mit einem Rohr, eine an dem Fittingkörper festgelegte, im Wesentlichen zylinderförmige Presshülse mit einem Pressbereich, und einen an der Presshülse festgelegten Anschlagring auf, der den Pressbereich in einer axialen Richtung der Presshülse begrenzt. Dabei weist der Anschlagring eine im Wesentlichen zylinderförmige Innenkontur mit hervorstehenden, ersten Bereichen und gegenüber den ersten Bereichen zurücktretenden, zweiten Bereichen auf. Die ersten Bereiche des ersten Anschlagrings umgreifen eine Außenkontur der Presshülse klemmend. Die zweiten Bereiche des Anschlagrings sind von der Außenkontur der Presshülse beabstandet.

Ein derart ausgestalteter Anschlagring mit einer Innenkontur mit hervorstehenden und zurücktretenden Bereichen ermöglicht die Herstellung einer sicheren Klemmverbindung, auch unter Berücksichtigung möglicher Toleranzen eines Pressfittings. Eine derartige Klemmung hält den Anschlagring sicher an einer Presshülse fest, auch schon vor der Montage der Presshülse an dem eigentlichen Fittingkörper. Auf diese Weise wird unter anderem sichergestellt, dass sich der Anschlagring vor Montage der Presshülse auf dem Fittingkörper sowie vor dem Verpressen nicht unbeabsichtigt von der Presshülse löst.

Anspruchsgemäß weist die Presshülse einen vorgegeben Außendurchmesser d₃ mit einem vorgegebenen Toleranzbereich auf. Dabei ist ein lichter Innendurchmesser d₁ zwischen den ersten Bereichen kleiner als ein vorgegebener Außendurchmesser d₃ der Presshülse abzüglich einer negativen Toleranz, und ein lichter Innendurchmesser d₂ zwischen den zweiten Bereichen ist größer als der vorgegebene Außendurchmesser d₃ zuzüglich einer positiven Toleranz. Der vorgegebene Toleranzbereich beträgt zirka 1 % eines Durchmessers eines mit dem Pressfitting zu verbindenden Rohres und/oder mindestens 0,2 mm. Der lichte Innendurchmesser d₁ zwischen den ersten Bereichen um zirka 0,5 % und/oder mindestens 0,1 mm kleiner ist als der vorgegebene Außendurchmesser d₃ abzüglich der negativen Toleranz. Und der lichte Innendurchmesser d₂ zwischen den zweiten Bereichen um zirka 0,5 % und/oder mindestens 0,1 mm größer ist als der vorgegebene Außendurchmesser d₃ zuzüglich der positiven Toleranz.

In wenigstens einer Ausgestaltung weist der Fittingkörper eine umlaufende Nut auf, und die Presshülse weist an einem fittingseitigen (oder proximalen), ersten axialen Ende einen in radialer Richtung nach innen weisenden ersten Vorsprung auf, der im am Fittingkörper festgelegten Zustand in die Nut eingreift, sodass die Presshülse unmittelbar am Fittingkörper befestigt ist. Eine derartige direkte Verbindung zwischen der Presshülse und dem Fittingkörper, beispielsweise durch Verrasten des ersten Vorsprungs mit der umlaufenden Nut, erhöht die Stabilität des Pressfittings nach der Montage der Presshülse an dem Fittingkörper, beispielsweise gegenüber Stößen aus einer lateralen Richtung.

In wenigstens einer Ausgestaltung weist die Presshülse einen oder eine Mehrzahl von Schlitze auf, die sich vom ersten axialen Ende in Richtung des Pressbereichs erstrecken. Derartige Schlitze erleichtern das Aufbringen der Presshülse auf den Fittingkörper. Dabei erleichtern die zurücktretenden, zweiten Bereiche des Anschlagrings das Aufbiegen des ersten Ende der Presshülse bei deren Montage auf dem Fittingkörper.

Gemäß einer möglichen Ausgestaltung sind die ersten und zweiten Bereiche durch bogenförmige Übergangsbereiche miteinander verbunden. Eine derartige Form ist verhältnismäßig einfach herzustellen und stellt zugleich eine sichere Klemmung des Anschlagrings an der Presshülse sicher.

Gemäß einer alternativen Ausgestaltung werden die zweiten Bereiche durch eine im Wesentlichen zylinderförmige Innenfläche des Anschlagrings gebildet, und die ersten Bereiche werden durch aus der Innenfläche herausragende Stege gebildet. Eine derartige Ausgestaltung ist besonders materialsparend in der Herstellung und stellt ebenfalls eine sichere Klemmung des Anschlagrings sicher.

Gemäß einem zweiten Aspekt der Offenbarung wird eine Montagegruppe für das Pressfitting gemäß dem ersten Aspekt beschrieben. Die Montagegruppe weist eine im Wesentlichen zylinderförmige Presshülse mit einem Pressbereich und einen an einem ersten axialen Ende der Presshülse festgelegten Anschlagring auf, der den Pressbereich in einer axialen Richtung der Presshülse begrenzt. Dabei weist der Anschlagring eine im Wesentlichen zylinderförmige Innenkontur mit hervorstehenden, ersten Bereichen und gegenüber den ersten Bereichen zurücktretenden, zweiten Bereichen auf, wobei die ersten Bereiche des Anschlagrings eine Außenkontur der Presshülse klemmend umgreifen und die zweiten Bereiche des Anschlagrings von der Außenkontur der Presshülse beabstandet sind.

Bei einer derartigen Montagegruppe ist ein Anschlagring besonders sicher an einer Presshülse festgelegt. Somit kann die Montagegruppe unkompliziert gelagert und gegebenenfalls transportiert werden, bevor sie auf einen entsprechenden Fittingkörper eines Pressfittings aufgebracht wird.

Weitere vorteilhafte Ausgestaltungen sind in den angehängten Ansprüchen sowie der nachfolgenden, ausführlichen Beschreibung von Ausführungsbeispielen offenbart.

Die Erfindung wird nachfolgend anhand unterschiedlicher Ausführungsbeispiele unter Bezugnahme auf die angehängten Figuren im Detail erläutert. Dabei bezeichnen gleiche Bezugszeichen gleiche oder gleichartige Komponenten unterschiedlicher Ausführungsbeispiele.
- Figur 1: zeigt eine Explosionsdarstellung eines Pressfittings mit einem Anschlagring.
- Figuren 2 bis 4: zeigen unterschiedliche Darstellungen eines Anschlagrings gemäß Figur 1.
- Figur 5: zeigt das Pressfitting gemäß Figur 1 im montierten Zustand.
- Figur 6: zeigt einen Querschnitt durch das Pressfitting gemäß Figur 5.
- Figur 7: zeigt eine alternative Ausgestaltung eines Anschlagrings.
- Figuren 8 und 9: zeigen unterschiedliche Ansichten eines weiteren Anschlagrings.
- Figur 10: zeigt die Montage einer Montagegruppe an einem Fittingkörper.
- Figur 11: zeigt schematisch ein Verfahren zur Montage eines Pressfittings.
- Figur 12: zeigt ein erstes Pressfitting gemäß dem Stand der Technik.
- Figur 13: zeigt ein zweites Pressfitting gemäß dem Stand der Technik.

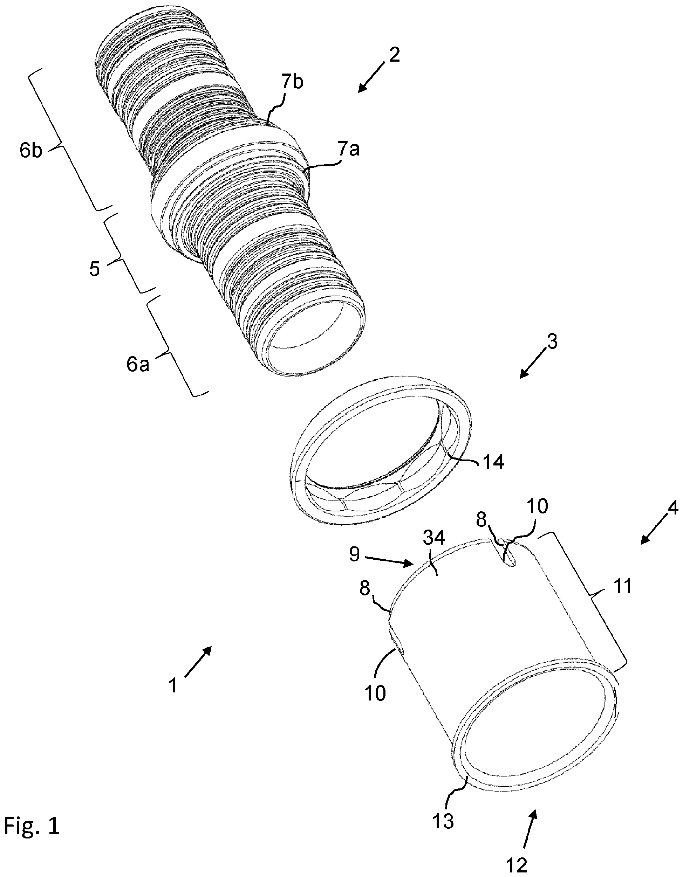

Figur 1 zeigt eine Explosionsdarstellung eines Pressfittings 1. Das Pressfitting 1 weist einen Fittingkörper 2, einen Anschlagring 3 und eine Presshülse 4 auf.

Im Ausführungsbeispiel handelt es sich bei dem Fittingkörper 2 um eine geradlinige, im Wesentlichen zylinderförmige Kupplung zum Verbinden zweier Rohre mit demselben Durchmesser. Selbstverständlich sind auch andere Fittingkörper, wie beispielsweise Winkelverbindungen, T-Stücke oder Kupplungen zum Verbinden von Rohren mit unterschiedlichen Durchmessern, möglich.

Der Fittingkörper 2 kann aus einem Kunststoffwerkzeug, wie beispielsweise einem Polymerwerkstoff oder aus einem Metallwerkstoff gefertigt sein. Die Oberfläche des Fittingkörpers 2 weist mehrere Erhebungen und Nuten auf, die eine sichere und dichte Verpressung eines in der Figur 1 nicht dargestellten Rohres, beispielsweise eines Kunststoff-, Metall- oder Verbundstoffrohre, mit dem Fittingkörper 2 sicherstellen. Hierzu können weitere, in der Figur 1 aus Gründen der Übersichtlichkeit nicht dargestellte Dichtelemente auf dem Fittingkörper 2 aufgebracht sein.

Der Fittingkörper 2 umfasst einen zentralen Bereich 5 sowie zwei einander gegenüberliegende Anschlussbereiche 6a und 6b. In dem zentralen Bereich 5 sind, jeweils benachbart zu dem jeweiligen Anschlussbereich 6a beziehungsweise 6b, Nuten 7a beziehungsweise 7b vorgesehen, die zum Verrasten mit nach innen aus der Presshülse 4 hervorstehenden ersten Vorsprüngen in Form von Lippen 8 dienen.

Die Presshülse 4 ist typischerweise aus einem Metallwerkstoff, insbesondere Edelstahl, gefertigt. Um eine erforderliche Kraft zum Verrasten der Presshülse 4 mit dem Fittingkörper 2 zu reduzieren, ist ein erstes axiales Ende 9 der Presshülse 4 mit mehreren Schlitzen 10 versehen. Die Schlitze 10 erleichtern ein Aufweiten des ersten axialen Endes 9 beim Aufschieben der Presshülse 4 auf den Fittingkörper 2. Dabei weist das erste axiale Ende 9 der Presshülse 4 in Richtung des zentralen Bereichs 7 des Fittingkörpers 2 und kann somit auch als proximales Ende bezeichnet werden. Bevor die Presshülse 4 auf den Fittingkörper 2 aufgebracht wird, wird an ihr zunächst der Anschlagring 3 montiert.

Der Anschlagring 3 ist typischerweise aus einem Kunststoffwerkzeug, insbesondere einem Polymerwerkstoff, gefertigt und begrenzt einen Pressbereich 11 der Presshülse 4 am ersten axialen Ende 9 der Presshülse 4. Am gegenüberliegenden, distalen beziehungsweise zweiten axialen Ende 12 der Presshülse 4 wird der Pressbereich 11 im dargestellten Ausführungsbeispiel durch einen zweiten Vorsprung in Form eines Flansches 13 der Presshülse 4 selbst begrenzt. Während eines Verpressens des Pressfittings 1 wirken Pressbacken eines in den Figuren nicht dargestellten Presswerkzeugs auf den Pressbereich 11 der Presshülse 4 ein und stellen so eine Formschlussverbindung zwischen dem Fittingkörper 3, einem in das Pressfitting eingebrachte Rohrende und der Presshülse 4 her.

Um den Anschlagring 3 bereits vor Montage der Presshülse 4 an dem Fittingkörper 2 sicher an der Presshülse 4 zu befestigen, weist der Anschlagring 3 eine hülsenseitige Innenkontur 14 auf, die zur Herstellung einer Klemmverbindung dient.

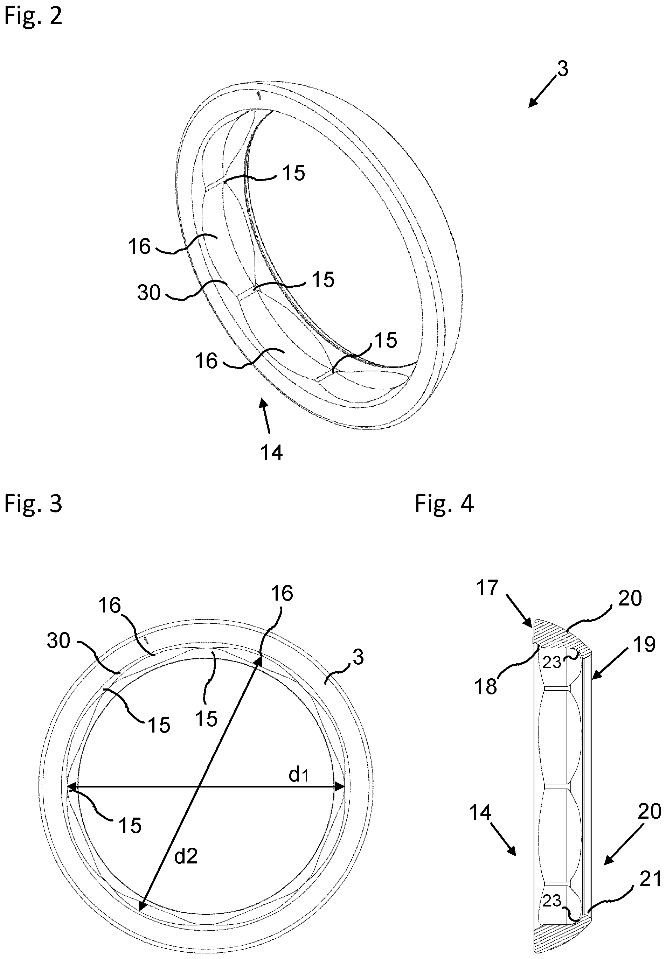

Wie in den Figuren 2 bis 4 zu erkennen ist, weist die Innenkontur 14 im dargestellten Ausführungsbeispiel insgesamt acht hervorstehende, erste Bereiche 15 auf. Dazwischen liegen acht demgegenüber zurücktretende, zweite Bereiche 16. Der Anschlagring 3 kann sich beim Aufschieben auf das erste axiale Ende 9 der Presshülse 4 leicht verformen. Dabei erzeugen insbesondere die ersten Bereiche 15 einen Klemmsitz.

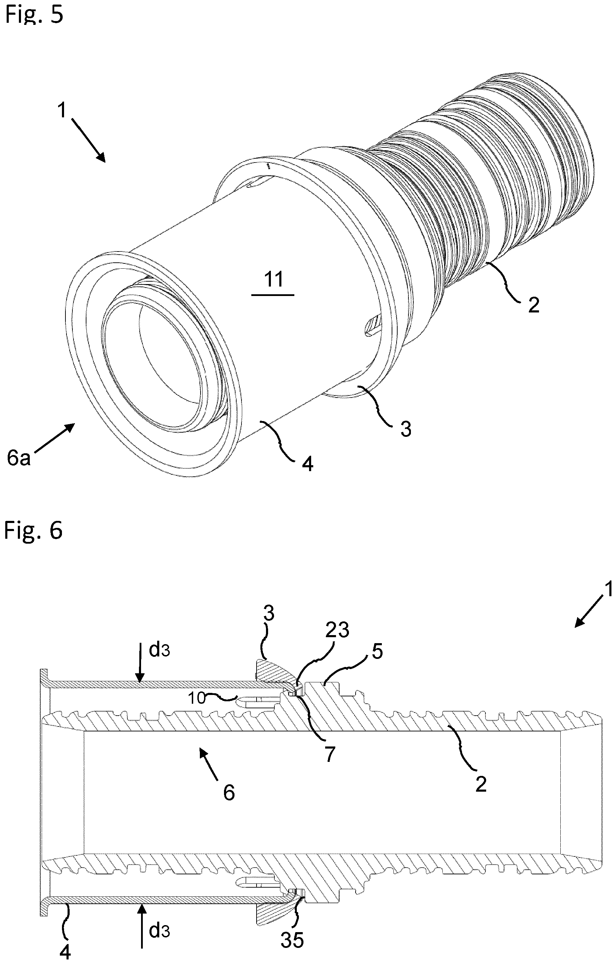

Hierzu ist ein erster Innendurchmesser d₁ eines verbleibenden lichten Bereichs zwischen den ersten Bereichen 15 so dimensioniert, dass er kleiner ist als ein in Figur 6 dargestellter Außendurchmesser d₃ der Presshülse 4 zuzüglich einer möglichen, negativen Herstellungstoleranz. Beispielsweise kann eine Presshülse für einen Rohrdurchmesser von 25 mm Durchmesser einen Toleranzbereich von zirka 0,25 mm, also etwa 1 % des Nenndurchmessers, aufweisen. In diesem Fall ist der erste Innendurchmesser d₁ zwischen Stirnseiten der ersten Bereiche 15 derart dimensioniert, dass selbst bei einem minimal zulässigen Außendurchmesser der Presshülse 4 eine Überlappung von 0,1 mm zum Bereitstellen einer Klemmkraft verbleibt. Umgekehrt besteht bei einem maximal zulässigen Außendurchmesser der Presshülse 4 eine Überlappung von 0,35 mm.

Dagegen ist ein zweiter Innendurchmesser d₂ zwischen zwei gegenüberliegenden, am weitesten zurücktretenden Teilen der zweiten Bereiche 16 so groß dimensioniert, dass in jedem Fall ein lichter Abstand zwischen einer Mantelfläche der Presshülse 4 und einem korrespondieren zweiten Bereich 16 der Innenkontur 14 des Anschlagrings 3 verbleibt. Beispielsweise verbleibt ein minimaler Freiraum von 0,1 mm für den Fall eines maximalen Außendurchmessers der Presshülse 4 innerhalb des Toleranzbereiches und ein maximaler Abstand von 0,35 mm im Fall eines minimalen Außendurchmessers der Presshülse 4.

Im Ausführungsbeispiel gemäß den Figuren 1 bis 3 sind die ersten Bereiche 15 durch im Querschnitt bogenförmige Übergangsbereichen 30 mit den zweiten Bereichen 16 verbunden, in denen der Innendurchmesser des Anschlagrings 3 stetig zunimmt. Vorteil dieser Ausführung ist, dass die bogenförmigen Übergangsbereiche 30 mechanisch besonders stabil sind. Des Weiteren sind die hervorstehenden, ersten Bereiche 15 so breit ausgestaltet, dass sie bei der Montage des Anschlagrings 3 nicht vollständig in die Schlitze 10 der Presshülse 4 eintauchen.

Im Querschnitt gemäß Figur 4 ist zu erkennen, dass eine erste Seite 17 des Anschlagrings 3, die im montierten Zustand dem Pressbereich 11 zugewandt ist, eine erste Fase 18 aufweist. Die erste Fase 18 ermöglicht ein Zentrieren und leichtes Aufstecken des Anschlussrings 3 auf das erste axiale Ende 9 der Presshülse 3.

Des Weiteren ist zu erkennen, dass eine gegenüberliegende zweite Seite 19 des Anschlagrings 3, die im montierten Zustand dem zentralen Bereich 6 des Fittingkörpers 2 zugewandt ist, eine fittingseitige Innenkontur 20 mit einer zweiten Fase 21 aufweist. Die zweite Fase 21 dient unter anderem zum Zentrieren einer Montagegruppe, umfassend den Anschlagring 3 und die Presshülse 4, bei dessen Montage auf dem Fittingkörper 2. Eine bogenförmige Außenkontur 22 des Anschlagrings 3 verbindet den äußeren Durchmesser der ersten Seite 17 kontinuierlich mit dem Außendurchmesser der zweiten Seite 19, sodass im Querschnitt keine Stufen vorhanden sind. Die hülsenseitige Innenkontur 14 und die fittingseitige Innenkontur 20 werden durch einen nach innen ragenden dritten Vorsprung voneinander getrennt, der zugleich eine offene Bodenfläche 23 der hülsenseitigen Innenkontur 14 bildet und eine maximale Einstecktiefe der Presshülse 4 begrenzt.

Im montierten Zustand gemäß den Figuren 5 und 6 kann der dritte Vorsprung beziehungsweise die offene Bodenfläche 23 des Anschlagrings 3, wie im Querschnitt der Figur 6 dargestellt, ganz oder teilweise in die Nut 7 des Fittingkörpers 2 eingreifen. Bei entsprechender Dimensionierung kann er auch auf einer Oberfläche des Fittingkörpers 2 außerhalb der Nut 7 anliegen. Im Ausführungsbeispiel begrenzt er die Aufstecktiefe der Baugruppe beim Aufbringen der Presshülse 4 auf den Anschlussbereich 6a, indem die zweite Seite 19 des Anschlagrings 3 an eine Stirnfläche 35 des zentralen Bereichs 5 anstößt.

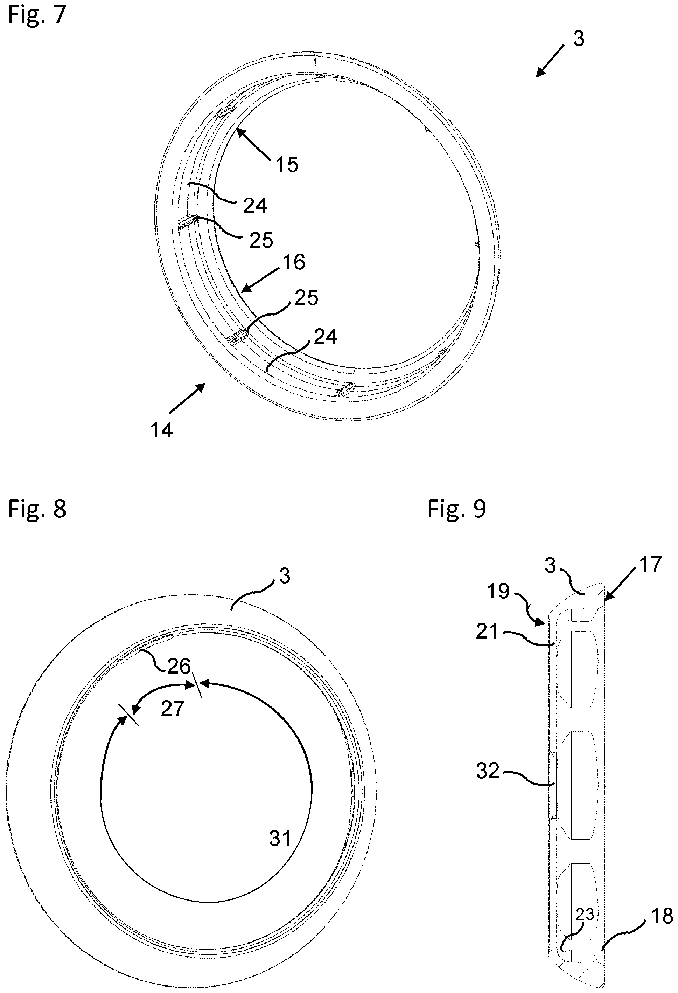

Figur 7 zeigt eine alternative Ausgestaltung einer hülsenseitigen Innenkontur 14 eines Anschlagrings 3. Abweichend von dem Anschlagring 3 gemäß den Figuren 1 bis 4 umfasst die Innenkontur 14 gemäß Figur 7 eine im Wesentlichen zylinderförmige Innenfläche 24 und darauf angeordnete Stege 25. Im Ausführungsbeispiel sind insgesamt acht solche Stege 25 vorhanden, die die ersten Bereiche 15 des Anschlagsrings 1 bilden. Die dazwischenliegenden Abschnitte der zylinderförmigen Innenfläche 24 bilden die zweiten Bereiche 16. Bezüglich deren Bemaßung wird auf das oben Gesagte verwiesen.

Im Folgenden wird anhand der Figuren 8 bis 10 ein weiterer Aspekt der fittingseitigen Innenkontur 20 gemäß einer weiteren Ausgestaltung eines Anschlussrings beschrieben. In diesem Ausführungsbeispiel weist die fittingseitige Innenkontur 20 ein hervorstehendes Element 26 auf, das in einem relativ kleinen Kreissegment 27 des Anschlagrings 3 angeordnet ist. In dem übrigen, verbleibenden Teil, entsprechend einem größeren Kreissegment 31, weist der Anschlagrings 3 einen gleichbleibenden Querschnitt auf. Hervorstehend bedeutet in diesem Zusammenhang, dass eine zum Zentrum des Anschlagrings 3 weisende Oberfläche des Elements 26 über eine umgebende Oberfläche der fittingseitigen Innenkontur 20 beziehungsweise des gleichbleibenden Querschnitts im Kreissegment 31 hinaus hervorsteht.

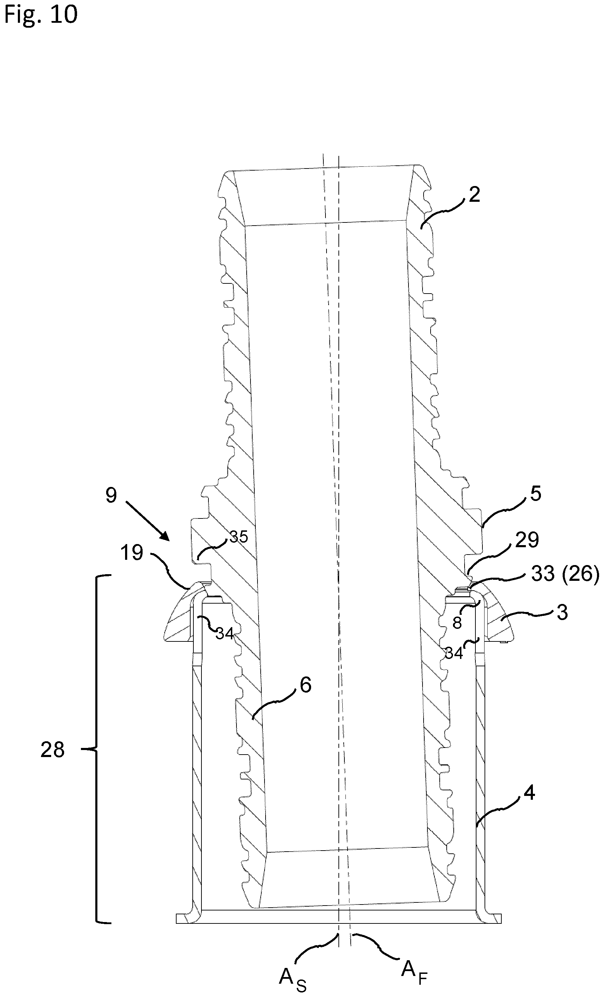

Beispielsweise kann das Element 26, wie in der Figur 10 dargestellt, als eine aus dem Innenumfang des Anschlagrings 3 radial, also senkrecht zu seiner Symmetrieachse nach innen vorstehenden Lasche 33 ausgebildet sein. Alternativ ist es auch möglich, das Element 26 wie in den Figuren 8 und 9 dargestellt als Einführschräge 32 auszubilden, dass auch einen Teil der zweiten Fase 21 bilden kann. In diesem Fall ist eine schräg nach innen geneigte Oberfläche der Einführschräge 32 im Bereich des kleineren Kreissegments 27, in dem das Element 26 ausgebildet ist, gegenüber einer Oberfläche der Fase 21 entweder parallel nach innen verschoben oder weist eine in Einführungsrichtung größere Neigung auf als die zweite Fase 21 der fittingseitigen Innenkontur 20.

Das Element 26 dient insbesondere dazu, beim Aufsetzen der Presshülse 4 mit dem darauf aufgesteckten Anschlussring 3 auf einen Anschlussbereich 6 des Fittingkörpers 2 zu einer relativen Verkippung deren Achsen zu führen.

Im in der Figur 10 dargestellten Ausführungsbeispiel steht eine Montagegruppe 28, aufweisend die Presshülse 4 und den Anschlussring 3, aufrecht und mit ihrem ersten axialen Ende 9 nach oben weisend auf einer ebenen Oberfläche, wie beispielsweise einer Haltevorrichtung einer Werkzeugmaschine. Sodann wird ein Fittingkörper 2 mit einem nach unten weisenden Anschlussbereich 6 im Wesentlichen senkrecht von oben in die Öffnung der Montagegruppe 28 eingeführt. Dabei stimmen die Achsenrichtungen der Montagegruppe 28 und des Fittingkörpers 2 zunächst überein.

Sobald die zweite Seite 19 des Anschlussrings 3 auf eine vor der Nut 7 befindliche, umlaufende Rippe 29 trifft, bewirkt das Element 26, in Figur 10 in Form einer Lasche 33, eine asymmetrische Kraftverteilung, die wie dargestellt zu einem leichten relativen Verkippen der zentralen Achse A_{F} des Anschlussbereichs 6 gegenüber der Symmetrieachse A_{S} der Montagegruppe 28 beziehungsweise der Presshülse 4 führt. Beispielsweise kann der Fittingkörper 2 um circa 2 bis 5° verkippt werden.

Dies hat zur Folge, dass die zwischen den Schlitzen 10 der Presshülse 4 gebildeten Segmente 34 der Presshülse 4 mit daran angeformten Lippen 8 sich beim Verrasten zeitlich leicht nacheinander aufweiten. Dies reduziert die erforderlichen Kräfte zum Verbinden der Montagegruppe 28 mit dem Fittingkörper 2 erheblich und erleichtert somit das Einführen des Anschlussbereichs 6 in die Montagegruppe 28. Unter Versuchsbedingungen konnten die Montagekräfte bei einem Pressfitting 1 für einen nominalen Rohrdurchmesser von 25 mm durch ein versetztes beziehungsweise verkipptes Einführen des Anschlussbereichs 6 in die Montagegruppe 28 auf eine Einpresskraft von 242 N gegenüber einer Einpresskraft von zirka 2100 N bei einem koaxialen Einpressen reduziert werden, was die Montage des Pressfittings 1 erheblich erleichtert. Für einen nominalen Rohrdurchmesser von 32 mm reduzierte sich die Einpresskraft von 1500 N auf 314 N. Diese Reduktion der beim Montieren auftretenden Kräfte hat den zusätzlichen Vorteil, dass eine Beschädigung des Fittingkörpers 2 vermieden werden kann, insbesondere bei der Verwendung von Kunststoffmaterialien für den Fittingkörper 2.

Sobald der Montageprozess abgeschlossen ist, das heißt sobald die zweite Seite 19 des Anschlagrings 3 an eine durch den zentralen Bereich 5 gebildete Stirnfläche 35 anschlägt, richten sich die Presshülse 4 und der Fittingkörper 2 wieder koaxial aus. Somit wirkt sich das versetzte beziehungsweise verkippte Aufbringen der Montagegruppe 28 nicht nachteilig auf dessen Ausrichtung oder auf die sichere Befestigung der Presshülse 4 an dem Fittingkörper 2 aus.

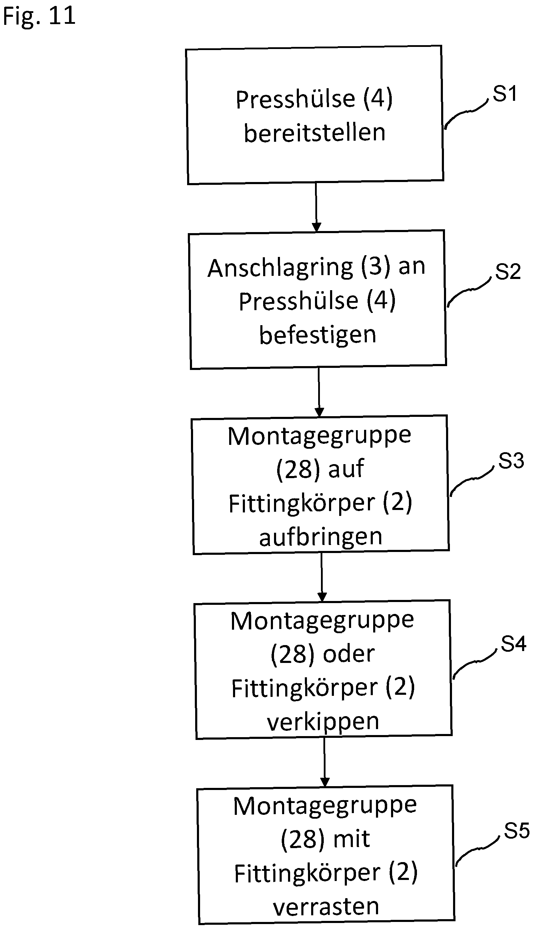

Figur 11 zeigt schematisch die Schritte eines Verfahrens zur Montage eines Pressfittings 1.

Zunächst wird ein einem Schritt S1 eine Presshülse 4 mit einem vorgegebenen nominellen Durchmesser bereitgestellt. Dieser Durchmesser kann erfindungsgemäß innerhalb eines vorgegebenen Toleranzbereiches um einen bestimmten negativen und/oder positiven Toleranzwert variieren. Bevorzugt weist die Presshülse 4 ein oder mehrere Hervorhebungen, wie insbesondere Lippen 8, zum direkten Verrasten mit einem Fittingkörper 2 auf.

In einem nachfolgenden Schritt S2 wird an einem ersten axialen Ende 9 ein Anschlagring 3 auf die Presshülse 4 aufgesteckt. Bevorzugt wird dieser an der Presshülse 4 befestigt, beispielsweise durch das erfindungsgemäße Vorsehen von erhabenen ersten Bereichen 15 und zurückliegenden, zweiten Bereichen 16, die zu einem Verklemmen des Anschlagrings 3 an der Presshülse 4 führen. Alternativ sind auch andere nicht erfindungsgemäße Verbindungen, insbesondere Formschlussverbindungen, möglich. In einem weiteren Schritt S3 wird die so hergestellte Montagegruppe 28 der Presshülse 4 mit dem daran befestigten Anschlagring 3 auf einen Anschlussbereich 6 eines Fittingkörpers 2 aufgebracht. Dies kann beispielsweise durch einen industriellen Bestückungsautomaten erfolgen.

In einem Schritt S4 werden die Längsachsen des Fittingkörpers 2 und der Montagegruppe 28 relativ zueinander verkippt. Dies kann beispielsweise durch eine entsprechende Ansteuerung eines Bestückungsautomaten oder eines Pressstempels oder, wie zuvor anhand der Figuren 8 bis 10 beschrieben, durch Vorsehung einer entsprechenden fittingseitigen Innenkontur 20 mit einem hervorragenden Element 26 sichergestellt werden. Nachfolgend wird die Montagegruppe 28 in einem Schritt S5 weiter auf den Fittingkörper 2 aufgeschoben beziehungsweise gepresst, die Presshülse 4 mit dem Fittingkörper 2 verrastet, beispielsweise durch ein Eingreifen von Lippen 8 in eine entsprechende Nut 7 des Fittingkörpers 2.

In den beschriebenen Ausführungsbeispielen bleibt der Anschlagring 3 während dem eigentlichen Verpressen der Presshülse 4 mit einem Rohrende intakt, da das Presswerkzeug auf den Anschlagring 3 keine Kraft in einer radialen Pressrichtung ausübt. Sofern eine Anzeige der Verpressung gewünscht ist, kann das beschriebene Pressfitting 1 beispielsweise mit einer schlauchförmigen Banderole als Verpresskennzeichnung versehen werden. Das Aufbringen und die Vorteile einer derartigen Banderole 114, wie sie beispielsweise in der Figur 12 dargestellt ist, wurden bereits in der DE 2018 109 555 B3 ausführlich beschrieben. Zur Vermeidung von Wiederholung wird auf deren diesbezügliche Offenbarung verwiesen und diese durch Bezugnahme in die vorliegende Beschreibung aufgenommen.

Die zuvor beschriebene hülsenseitigen Innenkontur 14 auf der dem Pressbereich 11 zugewandten Seite des Anschlagrings 3 sowie die fittingseitige Innenkontur 20 auf der dem Fittingkörper 2 zugewandten Seite des Anschlagrings 3 können wie zuvor beschrieben miteinander kombiniert werden. Jedoch bewirkt jede der Innenkonturen 14 und 20 auch für sich genommen die beschriebenen Effekte und Vorteile auf und können daher auch einzeln verwirklicht werden.

### Bezugszeichenliste

- 1: Pressfitting
- 2: Fittingkörper
- 3: Anschlussring
- 4: Presshülse
- 5: zentraler Bereich
- 6, 6a, 6b: Anschlussbereich
- 7, 7a, 7b: Nut
- 8: Lippe (erster Vorsprung)
- 9: erstes axiales Ende
- 10: Schlitz
- 11: Pressbereich
- 12: zweites axiales Ende
- 13: Flansch (zweiter Vorsprung)
- 14: (hülsenseitige) Innenkontur
- 15: erster Bereich
- 16: zweiter Bereich
- 17: erste Seite
- 18: erste Fase
- 19: zweite Seite
- 20: (fittingseitige) Innenkontur
- 21: zweite Fase
- 22: Außenkontur
- 23: offene Bodenfläche (dritter Vorsprung)
- 24: Innenzylinderfläche
- 25: Steg
- 26: Element
- 27: (kleines) Kreissegment
- 28: Montagegruppe
- 29: Rippe
- 30: Übergangsbereich
- 31: (größeres) Kreissegment
- 32: Einführschräge
- 33: Lasche
- 34: Segment (der Presshülse)
- 35: Stirnfläche

## Patentansprüche

1. Montagegruppe (28) für ein Pressfitting (1), aufweisend:
- eine im Wesentlichen zylinderförmige Presshülse (4) mit einem Pressbereich (11), wobei die Presshülse (4) einen vorgegeben Außendurchmesser d₃ mit einem vorgegebenen Toleranzbereich aufweist; und
- einen an einem ersten axialen Ende (9) der Presshülse (4) festgelegten Anschlagring (3), der den Pressbereich (11) in einer axialen Richtung der Presshülse (4) begrenzt, wobei
- der Anschlagring (3) eine im Wesentlichen zylinderförmige Innenkontur (14) mit hervorstehenden, erstem Bereichen (15) und gegenüber den ersten Bereichen (15) zurücktretenden, zweiten Bereichen (16) aufweist,
- ein lichter Innendurchmesser d₁ zwischen den ersten Bereichen (15) kleiner ist als der vorgegebene Außendurchmesser d₃ abzüglich einer negativen Toleranz, so dass die ersten Bereiche (15) des Anschlagrings (3) eine Außenkontur der Presshülse (4) klemmend umgreifen, und
- ein lichter Innendurchmesser d₂ zwischen den zweiten Bereichen (16) größer ist als der vorgegebene Außendurchmesser d₃ zuzüglich einer positiven Toleranz, so dass die zweiten Bereiche (16) des Anschlagrings (3) von der Außenkontur der Presshülse beabstandet sind;
- wobei der vorgegebene Toleranzbereich mindestens 0,2 mm und insbesondere zirka 1 % eines Durchmessers eines mit dem Pressfitting zu verbindenden Rohres beträgt;
- der lichte Innendurchmesser d₁ zwischen den ersten Bereichen (15) um zirka 0,5 % und/oder mindestens 0,1 mm kleiner ist als der vorgegebene Außendurchmesser d₃ abzüglich der negativen Toleranz; und
- der lichte Innendurchmesser d₂ zwischen den zweiten Bereichen (16) um zirka 0,5 % und/oder mindestens 0,1 mm größer ist als der vorgegebene Außendurchmesser d₃ zuzüglich der positiven Toleranz.

2. Pressfitting (1) für eine Rohrverbindung, aufweisend:
- einen Fittingkörper (2) zum Verbinden des Pressfittings (1) mit einem Rohr; und
- eine Montagegruppe (28) gemäß Anspruch 1, wobei die im Wesentlichen zylinderförmige Presshülse (4) der Montagegruppe (28) an dem Fittingkörper (2) festgelegte ist.

3. Pressfitting (1) nach Anspruch 2, wobei
- der Fittingkörper (2) eine umlaufende Nut (7) aufweist; und
- die Presshülse (4) an einem fittingseitigen, ersten axialen Ende (9) einen in radialer Richtung nach innen weisenden ersten Vorsprung aufweist, der im am Fittingkörper (2) festgelegten Zustand in die Nut (7) eingreift, so dass die Presshülse (4) unmittelbar am Fittingkörper (2) befestigt ist.

4. Pressfitting (1) nach Anspruch 3, wobei der in radialer Richtung nach innen weisende erste Vorsprung in Form einer Lippe (8) ausgestaltet ist.

5. Pressfitting (1) nach Anspruch 3 oder 4, wobei die Presshülse (4) an einem rohrseitigen, zweiten axialen Ende (12) einen in radialer Richtung nach außen weisenden zweiten Vorsprung aufweist, der den Pressbereich (11) in Richtung des zweiten axialen Endes (12) der Presshülse (4) begrenzt.

6. Pressfitting (1) nach Anspruch 5, wobei der in radialer Richtung nach außen weisende zweite Vorsprung in Form eines Flansch (13) ausgestaltet ist.

7. Pressfitting (1) nach einem der Ansprüche 3 bis 6,
wobei die Presshülse (4) einen oder eine Mehrzahl von Schlitze (10) aufweist, die sich vom ersten axialen Ende (9) in Richtung des Pressbereichs (11) erstrecken.

8. Pressfitting (1) nach einem der Ansprüche 3 bis 7, wobei
- der Anschlagring (3) an dem ersten axialen Ende (9) der Presshülse (4) angeordnet ist und den Pressbereich (11) in Richtung des ersten axialen Endes (9) der Presshülse (4) begrenzt; und
- der Anschlagring (3) einen in radialer Richtung nach innen weisenden, dritten Vorsprung aufweist, der im am Fittingkörper (2) festgelegten Zustand in die Nut (7) des Fittingkörpers (2) eingreift.

9. Pressfitting (1) nach Anspruch 8, wobei der in radialer Richtung nach innen weisende, dritte Vorsprung in Form einer offenen Bodenfläche (23) ausgestaltet ist.

10. Pressfitting (1) nach einem der Ansprüche 2 bis 9, wobei die ersten Bereiche (15) durch bogenförmige Übergangsbereiche (30) mit den zweiten Bereichen (16) verbunden sind.

11. Pressfitting (1) nach einem der Ansprüche 2 bis 9, wobei die zweiten Bereiche (16) durch eine im Wesentlichen zylinderförmige Innenfläche (24) des Anschlagrings (3) gebildet werden und die ersten Bereiche (15) durch aus der Innenfläche (24) herausragende Stege (25) gebildet werden.

12. Pressfitting (1) nach einem der Ansprüche 2 bis 11, wobei der Anschlussring (3) ein Kunststoffmaterial, insbesondere ein Polymermaterial, umfasst.

13. Pressfitting (1) nach einem der Ansprüche 2 bis 12, wobei die Presshülse (4) einen Metallwerkstoff, insbesondere Edelstahl, umfasst.

14. Pressfitting (1) nach einem der Ansprüche 2 bis 13, wobei der Fittingkörper (2) einen Metallwerkstoff und/oder einen Kunststoffwerkstoff umfasst.

15. Pressfitting (1) nach Anspruch 14,
wobei der Fittingkörper (2) einen Polymerwerkstoff umfasst.

## Claims

1. Mounting unit (28) for a press fitting (1), having:
- a substantially cylindrical press sleeve (4) with a pressing region (11), wherein the press sleeve (4) has a predetermined external diameter d₃ with a predetermined tolerance range; and
- a stop ring (3) which is fixed at a first axial end (9) of the press sleeve (4) and delimits the pressing region (11) in an axial direction of the press sleeve (4), wherein
- the stop ring (3) has a substantially cylindrical inner contour (14) with projecting first regions (15) and second regions (16) which are recessed relative to the first regions (15),
- a clear internal diameter d₁ between the first regions (15) is smaller than the predetermined external diameter d₃, less a negative tolerance, so that the first regions (15) of the stop ring (3) engage in a clamping manner around an outer contour of the press sleeve (4), and
- a clear internal diameter d₂ between the second regions (16) is greater than the predetermined external diameter d₃, plus a positive tolerance, so that the second regions (16) of the stop ring (3) are located at a distance from the outer contour of the press sleeve;
- wherein the predetermined tolerance range is at least 0.2 mm and in particular approximately 1% of a diameter of a pipe to be connected to the press fitting;
- the clear internal diameter d₁ between the first regions (15) is approximately 0.5% and/or at least 0.1 mm smaller than the predetermined external diameter d₃, less the negative tolerance; and
- the clear internal diameter d₂ between the second regions (16) is approximately 0.5% and/or at least 0.1 mm greater than the predetermined external diameter d₃, plus the positive tolerance.

2. Press fitting (1) for a pipe connection, having:
- a fitting body (2) for connecting the press fitting (1) to a pipe; and
- a mounting unit (28) according to Claim 1, wherein the substantially cylindrical press sleeve (4) of the mounting unit (28) is fixed to the fitting body (2).

3. Press fitting (1) according to Claim 2, wherein
- the fitting body (2) has a circumferential groove (7); and,
- at a fitting-side first axial end (9), the press sleeve (4) has a first projection, which points inwards in the radial direction and, when fixed to the fitting body (2), engages in the groove (7), so that the press sleeve (4) is fastened directly to the fitting body (2).

4. Press fitting (1) according to Claim 3, wherein the first projection, which points inwards in the radial direction, is designed in the form of a lip (8).

5. Press fitting (1) according to Claim 3 or 4, wherein, at a pipe-side second axial end (12), the press sleeve (4) has a second projection, which points outwards in the radial direction and delimits the pressing region (11) in the direction of the second axial end (12) of the press sleeve (4).

6. Press fitting (1) according to Claim 5, wherein the second projection, which points outwards in the radial direction, is designed in the form of a flange (13).

7. Press fitting (1) according to any one of Claims 3 to 6, wherein the press sleeve (4) has one or a plurality of slots (10), which extend from the first axial end (9) in the direction of the pressing region (11).

8. Press fitting (1) according to any one of Claims 3 to 7, wherein
- the stop ring (3) is arranged at the first axial end (9) of the press sleeve (4) and delimits the pressing region (11) in the direction of the first axial end (9) of the press sleeve (4); and
- the stop ring (3) has a third projection, which points inwards in the radial direction and, when fixed to the fitting body (2), engages in the groove (7) of the fitting body (2).

9. Press fitting (1) according to Claim 8, wherein the third projection, which points inwards in the radial direction, is designed in the form of an open base surface (23).

10. Press fitting (1) according to any one of Claims 2 to 9,
wherein the first regions (15) are connected to the second regions (16) by curved transitional regions (30).

11. Press fitting (1) according to any one of Claims 2 to 9,
wherein the second regions (16) are formed by a substantially cylindrical inner surface (24) of the stop ring (3), and the first regions (15) are formed by webs (25) protruding from the inner surface (24).

12. Press fitting (1) according to any one of Claims 2 to 11,
wherein the attachment ring (3) comprises a plastic material, in particular a polymer material.

13. Press fitting (1) according to any one of Claims 2 to 12,
wherein the press sleeve (4) comprises a metal substance, in particular stainless steel.

14. Press fitting (1) according to any one of Claims 2 to 13,
wherein the fitting body (2) comprises a metal substance and/or a plastic material substance.

15. Press fitting (1) according to Claim 14,
wherein the fitting body (2) comprises a polymer substance.

## Revendications

1. Groupe de montage (28) pour un raccord à sertir (1), présentant :
- un manchon à sertir (4) essentiellement cylindrique avec une zone de sertissage (11), le manchon à sertir (4) présentant un diamètre extérieur prédéfini d₃ avec une plage de tolérance prédéfinie ; et
- une bague de butée (3) fixée à une première extrémité axiale (9) du manchon à sertir (4), qui délimite la zone de sertissage (11) dans une direction axiale du manchon à sertir (4),
dans lequel
- la bague de butée (3) présente un contour intérieur (14) essentiellement cylindrique avec des premières zones (15) en saillie et des deuxièmes zones (16) en retrait par rapport aux premières zones (15),
- un diamètre intérieur libre d₁ entre les premières zones (15) est inférieur au diamètre extérieur prédéfini d₃ moins une tolérance négative, de telle sorte que les premières zones (15) de la bague de butée (3) entourent par serrage un contour extérieur du manchon à sertir (4), et
- un diamètre intérieur libre d₂ entre les deuxièmes zones (16) est supérieur au diamètre extérieur prédéfini d₃ plus une tolérance positive, de telle sorte que les deuxièmes zones (16) de la bague de butée (3) sont espacées du contour extérieur du manchon à sertir ;
- dans lequel la plage de tolérance prédéfinie est d'au moins 0,2 mm et notamment d'environ 1 % d'un diamètre d'un tube à raccorder avec le raccord à sertir ;
- le diamètre intérieur libre d₁ entre les premières zones (15) est inférieur d'environ 0,5 % et/ou d'au moins 0,1 mm au diamètre extérieur prédéfini d₃ moins la tolérance négative ; et
- le diamètre intérieur libre d₂ entre les deuxièmes zones (16) est supérieur d'environ 0,5 % et/ou d'au moins 0,1 mm au diamètre extérieur prédéfini d₃, plus la tolérance positive.

2. Raccord à sertir (1) pour un raccordement de tuyaux, présentant :
- un corps de raccord (2) pour raccorder le raccord à sertir (1) à un tuyau ; et
- un groupe de montage (28) selon la revendication 1, dans lequel le manchon à sertir essentiellement cylindrique (4) du groupe de montage (28) est fixé au corps de raccord (2).

3. Raccord à sertir (1) selon la revendication 2, dans lequel
- le corps de raccord (2) présente une rainure périphérique (7) ; et
- le manchon à sertir (4) présente, à une première extrémité axiale (9) côté raccord, une première saillie dirigée vers l'intérieur en direction radiale, qui s'engage dans la rainure (7) à l'état fixé sur le corps de raccord (2), de telle sorte que le manchon à sertir (4) est fixé directement sur le corps de raccord (2).

4. Raccord à sertir (1) selon la revendication 3, dans lequel la première saillie dirigée vers l'intérieur en direction radiale est réalisée sous la forme d'une lèvre (8) .

5. Raccord à sertir (1) selon la revendication 3 ou 4, dans lequel le manchon à sertir (4) présente, à une deuxième extrémité axiale (12) côté tuyau, une deuxième saillie orientée vers l'extérieur en direction radiale, qui délimite la zone de sertissage (11) en direction de la deuxième extrémité axiale (12) du manchon à sertir (4) .

6. Raccord à sertir (1) selon la revendication 5, dans lequel la deuxième saillie dirigée vers l'extérieur en direction radiale est conçue sous la forme d'une bride (13) .

7. Raccord à sertir (1) selon l'une quelconque des revendications 3 à 6, dans lequel le manchon à sertir (4) présente une ou une pluralité de fentes (10) s'étendant depuis la première extrémité axiale (9) en direction de la zone de sertissage (11).

8. Raccord à sertir (1) selon l'une quelconque des revendications 3 à 7, dans lequel
- la bague de butée (3) est agencée à la première extrémité axiale (9) du manchon à sertir (4) et délimite la zone de sertissage (11) en direction de la première extrémité axiale (9) du manchon à sertir (4) ; et
- la bague de butée (3) présente une troisième saillie orientée vers l'intérieur en direction radiale, qui s'engage dans la rainure (7) du corps de raccord (2) à l'état fixé au corps de raccord (2).

9. Raccord à sertir (1) selon la revendication 8, dans lequel la troisième saillie orientée vers l'intérieur en direction radiale est conçue sous la forme d'une surface de fond ouverte (23).

10. Raccord à sertir (1) selon l'une quelconque des revendications 2 à 9, dans lequel les premières zones (15) sont reliées aux deuxièmes zones (16) par des zones de transition arquées (30).

11. Raccord à sertir (1) selon l'une quelconque des revendications 2 à 9, dans lequel les deuxièmes zones (16) sont formées par une surface intérieure (24) essentiellement cylindrique de la bague de butée (3) et les premières zones (15) sont formées par des nervures (25) dépassant de la surface intérieure (24).

12. Raccord à sertir (1) selon l'une quelconque des revendications 2 à 11, dans lequel la bague de raccordement (3) comprend un matériau plastique, notamment un matériau polymère.

13. Raccord à sertir (1) selon l'une quelconque des revendications 2 à 12, dans lequel le manchon à sertir (4) comprend un matériau métallique, notamment de l'acier inoxydable.

14. Raccord à sertir (1) selon l'une quelconque des revendications 2 à 13, dans lequel le corps de raccord (2) comprend un matériau métallique et/ou un matériau plastique.

15. Raccord à sertir (1) selon la revendication 14, dans lequel le corps de raccord (2) comprend un matériau polymère.
